# EUROPÄISCHE PATENTANMELDUNG

(11) **EP 0 553 474 A1**
(43) Veröffentlichungstag der Anmeldung: **04.08.1993**
(21) Anmeldenummer: 92121541.4
(22) Anmeldetag: 18.12.1992
(51) Int. Cl.: B23P 13/04, F16H 7/08

(54) **Spannschiene und Verfahren zum Herstellen von Spannschienen**

(30) Priorität: 29.01.1992 DE 4202483
(71) Anmelder: ROBERT BOSCH GMBH, 70442 Stuttgart (DE)
(72) Erfinder: Ballhause, Lutz, Dipl.-Ing., W-7054 Korb (DE); Schellenberg, Gerhard, Dipl.-Ing., W-7012 Fellbach (DE); Hezel, Bruno, W-7000 Stuttgart 80 (DE)

(57) **Zusammenfassung**

Die Erfindung betrifft eine Spannschiene und ein Verfahren zum Herstellen von Spannschienen. Es wird vorgeschlagen, daß die Spannschienen quer zu ihrer Längsrichtung als fortlaufender Strang gepreßt werden und daß der fortlaufende Strang entsprechend der Breite (B) einer einzelnen Spannschiene zerteilt wird und die durch das Zerteilen entstandenen Grate entfernt werden. Eine jede Spannschiene weist dann mindestens eine der Form des zu spannenden Elements angepaßte Fläche (26), eine als Gleitlager ausgebildete Öffnung (20) und eine Aufnahme (24, 40), an die eine eine Spannkraft erzeugende Vorrichtung angreift, auf, wobei die Fläche (26), die Öffnung (20) und die Aufnahme (24, 40) nicht nachgearbeitet werden müssen.

## Beschreibung

### Stand der Technik

Die Erfindung bezieht sich auf eine Spannschiene und auf ein Verfahren zum Herstellen von Spannschienen nach der Gattung der unabhängigen Ansprüche. Derartige Spannschienen werden unter anderem in Verbrennungsmotoren zum Spannen von Steuerketten eingesetzt und sind dabei einem breiten Spektrum von gleichförmigen und hochfrequenten Druckbelastungen in einem großen Temperaturbereich ausgesetzt.

Spannschienen werden üblicherweise im Druckgußverfahren hergestellt, wobei Aluminium oder eine Aluminiumlegierung flüssig in ein Druckgußwerkzeug eingepreßt und nach Erkalten in fester Form ausgestoßen wird. Die so erzeugten Spannschienen müssen je nach Qualität und Alter des Druckgußwerkzeugs aufwendig nachbearbeitet werden. Ferner unterliegt die relativ teure Druckgußform einem erheblichen Verschleiß und bedarf in regelmäßigen Abständen einer kostenintensiven Nachbearbeitung.

Es ist auch bekannt, Spannschienen aus gestanzten und gebogenen Blechteilen zusammenzusetzen.

### Vorteile der Erfindung

Das erfindungsgemäße Verfahren zum Herstellen von Spannschienen hat demgegenüber den Vorteil, daß die Nachbearbeitung der gepreßten und zerteilten Einzelteile minimal ist. Die Nachbearbeitung kann sogar vollständig entfallen, wenn beim Zerteilen keine Grate entstehen. Ferner kann aufgrund der exakten, gleichbleibenden Geometrie des Strangs und dessen Oberflächengüte auf ein Nachschleifen der Gleitfläche und ein Bohren und Reiben des Gleitlagers verzichtet werden.

Weitere Vorteile ergeben sich durch die beim Strangpreßverfahren verwendbaren Aluminiumlegierungen, die gegenüber den beim Druckgußverfahren eingesetzten weniger spröde sind und dadurch der Spannschiene eine größere Dehnfähigkeit und Stabilität verleihen, was eine Gewichtsersparnis aufgrund verkleinerter Querschnitte und eines einfacheren konstruktiven Aufbaus von ca. 30 % pro Spannschiene ergibt.

Durch das Strangpreßverfahren wird ferner vermieden, daß sich Lunker und andere Hohlräume im Grundkörper der Spannschiene während des Herstellungsprozesses bilden. Solche Fehlstellen treten bei Spannschienen, die mittels des Druckgußverfahrens hergestellt wurden, immer wieder auf und führen zu schlecht erkennbaren Ausschußteilen.

Das Wegfallen der Nachbearbeitung, die Materialersparnis und auch der Kostenvorteil im Werkzeugbereich - ein Werkzeug zum Strangpressen ist bedeutend billiger als ein Druckgußwerkzeug für entsprechende Teile - führen zu einem Kostenvorteil von fast 50 % pro Spannschiene.

Eine bevorzugte Verwendung der Spannschiene ist gegeben zum Spannen von Ketten oder Riemen.

### Zeichnung

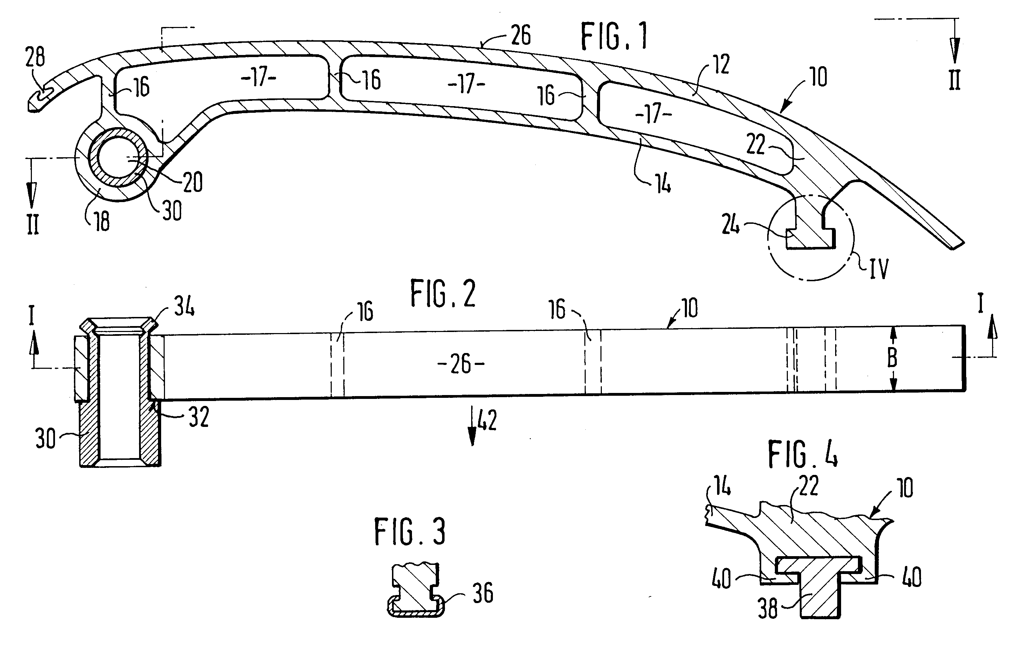

Eine nach dem erfindungsgemäßen Verfahren hergestellte Spannschiene ist in der Zeichnung dargestellt und in der nachfolgenden Beschreibung näher erläutert. Es zeigen Figur 1 eine Seitenansicht im Schnitt gemäß Linie I-I in Figur 2 und Figur 2 eine Ansicht von oben, teilweise geschnitten nach Linie II-II in Figur 1. Die Figuren 3 und 4 zeigen Varianten der Einzelheit IV in Figur 1.

### Beschreibung des Ausführungsbeispiels

In Figur 1 ist ein bogenförmiger Grundkörper 10 einer Spannschiene dargestellt, der einen oberen Strang 12, einen dazu im Abstand verlaufenden unteren Strang 14 und die beiden Stränge 12, 14 verbindende Streben 16 aufweist. Zwischen den Streben 16 und den Strängen 12, 14 sind Hohlräume 17.

Der Verbindungspunkt zwischen der in Figur 1 gezeigten linksseitigen Strebe 16 und dem unteren Strang 14 ist rohrförmig ausgebildet und weist eine kreisrunde Öffnung 20 auf. Am rechtsseitigen Ende mündet der Strang 14 in eine Strebe 22, die gegenüber den Streben 16 verstärkt ausgebildet ist. Diese Strebe 22 setzt sich in einem T-Stück 24 nach unten fort, das als Aufnahme für einen Hydraulikzylinder dient.

Der obere Strang 12 ist länger als der untere Strang 14 und ragt linksseitig und rechtsseitig über die Streben 16, 22 hinaus. An der oberen Seite 26 des Strangs 12 liegt im eingebauten Zustand der Spannschiene das zu spannende Element an, zum Beispiel eine Steuerkette eines Verbrennungsmotors, und muß entsprechend genau geformt und von hoher Oberflächenqualität sein. In den meisten Anwendungsfällen wird jedoch zwischen der oberen Seite 26 und dem zu spannenden Element ein Gleitbelag aus Kunststoff eingebracht (nicht dargestellt), zu dessen Befestigung am oberen Strang 12 Aussparungen 28 vorgesehen sein können.

In die Öffnung 20, die als Gleitlager ausgebildet ist, kann eine Lagerbuchse 30 eingepreßt werden, die bei Bedarf seitlich aus der Spannschiene vorsteht und im eingebauten Zustand die Spannschiene in einer bestimmten Lage fixiert. Die Lagerbuchse 30 wird dazu in die Öffnung 20 bis zu einem Anschlag 32 eingepreßt und auf der dem Anschlag 32 gegenüberliegenden Seite durch Umbördeln des vorstehenden Randes 34 gesichert.

Das T-Stück 24 kann, wie in Figur 3 gezeigt, um die angreifenden Kräfte besser zu verteilen, mit einer Schutzkappe 36, zum Beispiel einem tiefgezogenen Stahlblech, umfasst sein. Es ist auch möglich, das T-Stück 24 als separates Bauteil 38 auszugestalten und nachträglich in den Grundkörper 10 einzupressen. Dazu wird am Grundkörper eine Aussparung durch entsprechend angeformte Kragen 40 ausgebildet, die dann das Bauteil 38 aufnehmen. Das Bauteil 38 kann entsprechend den Anforderungen zum Beispiel aus fließgepreßtem Stahl hergestellt sein.

### Herstellung der Spannschiene:

Die Spannschiene wird als Strang quer zu ihrer Längsrichtung in Richtung des Pfeils 42 in Figur 2 gepreßt. Das Strangpreßwerkzeug weist dazu eine Form mit dem Querschnitt der Spannschiene, wie in Figur 1 gezeigt, auf. Der fließgepreßte Strang wird entsprechend der Breite B der Spannschiene zersägt. Anschließend werden die entstehenden Grate entfernt. Die obere Seite 26, die Öffnung 20 sowie das T-Stück 24 und die Aussparung 28 bedürfen keiner Nachbearbeitung, da durch das Strangpreßverfahren die geforderte hohe Maßhaltigkeit und Oberflächengüte erreicht wird.

## Patentansprüche

1. Verfahren zum Herstellen von Spannschienen, dadurch gekennzeichnet, daß die Spannschienen quer zu ihrer Längsachse als fortlaufender Strang gepreßt werden und daß der fortlaufende Strang entsprechend der erforderliche Breite (B) einer einzelnen Spannschiene zerteilt wird und die durch das Zerteilen entstandenen Grate entfernt werden.

2. Verfahren nach Anspruch 1, dadurch gekennzeichnet, daß eine Lagerbuchse (30) in eine in der Spannschiene vorgesehenen Öffnung (20) eingepreßt und gesichert wird.

3. Spannschiene, hergestellt mittels des Verfahrens nach Anspruch 1, dadurch gekennzeichnet, daß die Spannschiene mindestens eine der Form des zu spannenden Elements angepaßte Fläche (26) aufweist, sowie eine als Gleitlager ausgebildete Öffnung (20) und eine Aufnahme (24, 40) an die eine eine Spannkraft erzeugende Vorrichtung angreift.

4. Spannschiene, hergestellt mittels des Verfahrens nach Anspruch 1 und 2, dadurch gekennzeichnet, daß die Länge der in die Spannschiene eingepreßte Lagerbuchse (30) größer ist als die Breite (B) der Spannschiene und daß die Lagerbuchse (30) mindestens auf einer Seite der Spannschiene hervorsteht.

5. Spannschiene nach Anspruch 3 oder 4, dadurch gekennzeichnet, daß die Spannschiene eine Aufnahme (24, 38, 40) aufweist, an der eine eine Spannkraft erzeugende Vorrichtung angreift.

6. Spannschiene nach Anspruch 5, dadurch gekennzeichnet, daß eine Schutzkappe (36) die Aufnahme (24) umfaßt.

7. Spannschiene nach Anspruch 5, dadurch gekennzeichnet, daß die Aufnahme (40) eine taschenförmige Ausnehmung aufweist, in die ein die auftretenden Kräfte aufnehmendes Formteil (38) eingepreßt ist.

8. Spannschiene nach einem der Ansprüche 3 bis 7, gekennzeichnet durch die Verwendung als Ketten- oder Riemenspannvorrichtung.
